# EUROPEAN PATENT SPECIFICATION

(11) **EP 0 428 736 B1**
(45) Date of publication and mention of the grant of the patent: **26.06.2002**
(21) Application number: 90907399.1
(22) Date of filing: 27.04.1990
(51) Int. Cl.: C08K 3/08, A23L 3/3436, C08L 101/00, B65D 81/26

(54) **OXYGEN-ABSORBENT RESIN COMPOSITION AND LAMINATE HAVING LAYER OF SAID COMPOSITION**
SAUERSTOFFABSORBIERENDE HARZZUSAMMENSETZUNG UND LAMINAT MIT SOLCHER SCHICHT
RESINE ABSORBANT L'OXYGENE ET STRATIFIE COMPORTANT UNE COUCHE DE CETTE RESINE

(30) Priority: 23.05.1989 JP 12782989
(43) Date of publication of application: 29.05.1991
(73) Proprietor: TOYO SEIKAN KAISHA, LTD., Tokyo 100 (JP)
(72) Inventor: KOYAMA, Masayasu 1-2-7, Kotsubo, Kanagawa-ken 249 (JP); ODA, Yasuhiro 25, Sachigaoka Asahi-ku, Kanagawa-ken 241 (JP); YAMADA, Muneki, Kanagawa-ken 252 (JP)
(74) Representative: Bailey, David Martin
(86) International application number: JP9000563
(87) International publication number: WO9014392

(56) References cited:
- EP-A- 0 221 549
- JP-A- 5 590 535
- WORLD PATENTS INDEX LATEST, week 8539, AN=85-240405 [39], Derwent Publications Ltd, London, GB; & JP-A-60 158 257 (NISSAN CHEM. IND. K.K.) 19-08-1985
- CHEMICAL ABSTRACTS, vol. 95, no. 11, abstract no. 95771a, Columbus, Ohio, US; & JP-A-56 017 633 (SHOWA) 19-02-1981
- WORLD PATENTS INDEX LATEST, week 8534, AN=85-206034 [34], Derwent Publications Ltd, London, GB; & JP-A-60 129 137 (FUJISHIMA) 10-07-1985

## Description

### Technical Background

The present invention relates to an oxygen-absorbing composition. More particularly, the present invention relates to an oxygen-absorbing resin composition comprising a heat-formable resin having a large oxygen permeation coefficient and a large water absorption and an oxygen scavenger incorporated therein.

Furthermore, the present invention relates to a cap provided with a liner or packing composed of the above resin composition or a vessel having a layer composed of the above resin composition.

### Conventional Technique

In a sealed packaging vessel, there is present a head space where the content is not filled, and such troubles as oxidation, deterioration and degradation of the content are caused by oxygen left in the head space.

Use of an oxygen scavenger has been tried from old for removing oxygen in a vessel. For example, Japanese Examined Patent Publication No. 62-1824 discloses application of this technique to a vessel wall. Namely, a packaging multi-layer structure formed by laminating a layer of a composition comprising a resin having an oxygen permeability, such as polyethylene, and an oxygen scavenger composed mainly of a reducing agent, with a layer having an oxygen barrier property, is disclosed.

In Japanese Unexamined Patent Publication No. 57-179273, we propose a sealing composition to be applied a vessel or cap, comprising an elastomer polymer and a water-insoluble oxygen absorber in an amount of 0.1 to 50 parts by weight per 100 parts by weight of solids of the elastomer polymer.

### Summary of the Invention

In the above-mentioned oxygen-absorbing resin composition used in the conventional technique, since the resin per se has a large oxygen permeation coefficient, it is to be expected that the oxygen-absorbing speed is high. However, the oxygen-absorbing speed is much lower than the oxygen-absorbing speed attained in the case where a paper-packaged oxygen-absorbing agent is directly charged, and the oxygen-absorbing effect is not satisfactory.

It is therefore a primary object of the present invention to provide a heat-formable oxygen-absorbing resin composition having a high oxygen-absorbing speed and an excellent oxygen-absorbing capacity.

Another object of the present invention is to provide a cap or packaging vessel formed by using the above resin composition, which is valuable for preserving water-containing contents such as drinks and precooked foods and is excellent in the sanitary effect because oxygen in the interior is promptly absorbed or permeation of oxygen from the outside is effectively cut.

In accordance with the present invention, there is provided an oxygen-absorbing resin composition comprising:
1) a heat-formable resin composition which is a blend of
   (a) a water-absorbing polymer selected from the group consisting of a modified polyethylene oxide, an acrylic acid/vinyl alcohol
   b) an olefin resin in a weight ratio of 1:99 to 90:10; and
2) an oxygen scavenger incorporated into the heat-formable resin composition 1) in an amount of 1 to 200 parts by weight per 100 parts by weight of the resin composition 1).

In the above oxygen-absorbing resin composition, it is preferred that the oxygen scavenger comprises reducing iron and an oxidation promoter, in which the content of copper is lower than 150 ppm based on iron and the content of sulfur is lower than 500 ppm based on iron.

The above-mentioned resin composition can be arranged in the form of a liner or packing in a cap for absorbing oxygen in the head space. Furthermore, the composition can be used for absorbing oxygen in a multi-layer vessel comprising a layer of the composition.

It is important that the oxygen-absorbing resin composition of the present invention should have the following two characteristics.

That is, the oxygen-absorbing resin composition comprises:
(1) a heat formable resin composition which is a blend of
   (a) a water absorbing modified polyethylene oxide obtainable by graft modifying polyethylene oxide with an ethylenically unsaturated carboxylic acid or an anhydride thereof or an acrylic acid/vinyl alcohol copolymer; and
   (b) an olefin resin in a weight ratio of 1:99 to 90:10; and
(2) an oxygen scavenger incorporated into the heat-formable resin composition in an amount of 1 to 200 parts by weight per 100 parts by weight of the resin composition.

In order to include an oxygen scavenger into a packaging material, it is necessary to disperse the oxygen scavenger into the resin, and in order to perform the absorption of oxygen through the resin effectively, the above-mentioned properties (1) and (2) are inevitably necessary.

However, it was found that property (2) alone is insufficient for attaining a satisfactory oxygen-absorbing speed.

The oxygen scavenger has, in general, a reducing property and the oxygen scavenger catches oxygen while the scavenger is oxidized by oxygen. The presence of water is indispensable for this oxidation reaction, that is, scavenging of oxygen.

In the present invention, the resin or resin composition per se has a water-absorbing property, and since this water-absorbing resin or resin composition is always present around the oxygen scavenger, water caught by the resin or resin composition is effectively utilized for the oxidation of the oxygen scavenger.

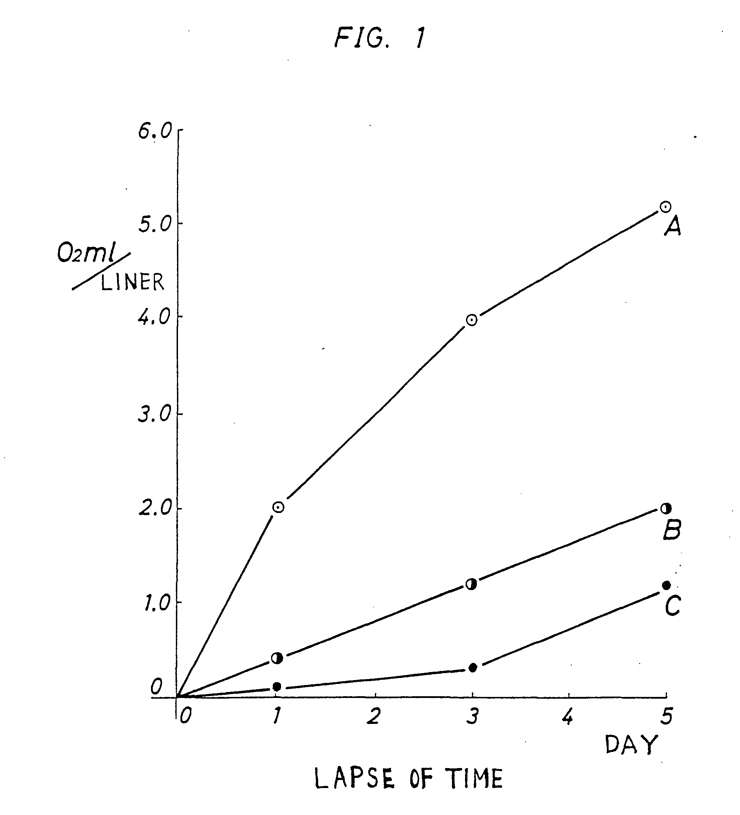

In Fig. 1 of the accompanying drawings, there is plotted the relation between the number of elapsing days and the amount absorbed of oxygen, observed when various resins containing 25% by weight of an oxygen scavenger (iron type) are used for liners. In Fig. 1, curve A shows the results of a liner composed of a resin composition having the above-mentioned properties (1) and (2) (described in Example 1) and an oxygen scavenger, curve B shows the results of a liner composed of a composition comprising a resin of polyethylene and an oxygen scavenger, and curve C shows the results of a liner composed of a composition comprising a resin of ethylene/vinyl alcohol copolymer and an oxygen scavenger. It is understood from Fig. 1 that when a resin composition having both of the properties (1) and (2) is used, a high oxygen-absorbing speed is obtained.

A resin having a large water adsorption is generally poor in heat formability, and if the resin is melt-kneaded with an oxygen scavenger, discoloration by intermolecular dehydration and deterioration of the resin by cutting of the main chain or crosslinking are readily caused.

In the present invention, this defect can be overcome by using a heat-formable, highly water-absorbing resin.

### Brief Description of the Drawings

Fig. 1 illustrates the relation between the oxygen, absorbing capacity per liner, plotted on the ordinate, and the number of elapsing days, plotted on the abscissa, which is observed with respect to various liners of the oxygen scavenger-containing, oxygen-absorbing composition of the present invention.

Fig. 2 is a sectional view showing an example of the laminate suitable for a liner of a cap or a packing.

Figs. 3 and 4 are sectional views showing examples of the laminate suitable for a vessel.
1: oxygen scavenger-containing resin composition layer
2: inner layer
3: outer layer
4: gas-barrier resin layer
5: moisture-resistant resin layer
6: adhesive layer
7a through 7g: adhesive layers

### Preferred Embodiments of the Invention

All of oxygen scavengers customarily used in this field can be used for the oxygen-absorbing composition of the present invention. In general, a substantially reducing, water-insoluble oxygen scavenger is preferably used. As suitable examples, there can be mentioned powders having a reducing property, such as reducing iron, reducing zinc and reducing tin powders, low oxides of metals such as ferrous oxide and triiron tetroxide, and reducing metal compounds such as iron carbide, ferrosilicon, iron carbonyl and iron hydride. These oxygen scavengers can be used singly or in the form of a mixture of two or more of them. Moreover, these oxygen scavenger can be used in combination with assistants, for example, hydroxide, carbonates, sulfites, thiosulfates, tertiary phosphates, organic acid salts and halides of alkali metals and alkaline earth metals, and active carbon, active alumina and activated acid clay, according to need.

Furthermore, there can be mentioned polymeric compounds having a polyhydric phenol in the skeleton, for example, polyhydric phenol-containing phenol/aldehyde resins.

It is generally preferred that the oxygen scavenger should have an average particle size smaller than 100 µm, especially smaller than 50 µm.

An oxygen scavenger for resins, comprising reducing iron and an oxidation promoter, in which the content of copper is lower than 150 ppm based on iron and the sulfur content is lower than 500 ppm based on iron, is especially preferably used as the oxygen scavenger for the oxygen-absorbing composition of the present invention.

Reducing iron preferably used for the oxygen scavenger can be obtained by reducing iron oxide (for example, mill scale) obtained at the iron-manufacturing step with coke, pulverizing formed sponge iron and subjecting the pulverized sponge iron to a finish reducing treatment in hydrogen gas or cracked ammonia gas, or by electrolytically precipitating iron from an aqueous solution of iron chloride obtained at the pickling step, pulverizing the precipitated iron and subjecting the pulverized iron to a finish reducing treatment. Iron oxides such as iron rusts formed on the surfaces of products during the iron and steel production process are relatively pure, and also iron chloride obtained by pickling these rusts is relatively pure. Sulfuric acid has generally been used for pickling, but if sulfuric acid is used, sulfur is contained in reducing iron at a level exceeding the allowable limit in the present invention, and use of this acidic iron is not suitable in the present invention. Furthermore, use of scrap iron as the starting material for the production of iron oxide should be avoided because a copper component is incorporated. Reduction firing of iron oxide is generally carried out at a temperature of about 600 to about 1200°C.

It is generally preferred that the particle size (median diameter) of the reducing iron be in the range of from 0.1 to 100 µm. The smaller is the particle size, the higher is the oxygen-absorbing property. However if the particle size is smaller than 1.0 µm, self-generation of heat is often caused during mixing or kneading in air. Accordingly, special means such as the treatment in a nitrogen current becomes necessary. If the particle size is larger than 2.0 µm, treatment in air becomes possible.

The production of reducing iron is not limited to the above-mentioned reduction firing of pickled iron. If iron in the starting material is pure, reducing iron can be prepared by spraying fused iron into a non-oxidizing atmosphere, pulverization of pure metallic iron and steam thermal decomposition of iron carbonyl.

As the oxidation promoter, an electrolyte free of a copper component or a sulfur component is used. In view of the ease of incorporation into a resin and the stability, an inorganic salt is preferably used as the electrolyte. A chloride of an alkali metal or alkaline earth metal is especially preferably used. A nitrate and a phosphate are not suitable because discoloration of the resin is readily caused. A combination of sodium chloride and calcium chloride is especially suitable as the oxidation promoter. If this oxidation promoter is used in combination with manganese salt such as manganese chloride (MnCl₂), the absorption of oxygen is effectively enhanced by promotion of the oxidation.

It is preferred that the reducing iron and oxidation promoter be used at a weight ratio of from 99.9/0.1 to 80/20, especially from 98/2 to 90/10, supposing that the total amount of the reducing iron and oxidation promoter is 100. Preferably, the oxidation promoter comprises 0.05 to 15.0% by weight of sodium chloride, 0.01 to 15.0% by weight of calcium chloride and 0.01 to 5.0% by weight of manganese chloride.

Furthermore, an assistant such as active carbon, active alumina or activated acid clay can be used in combination with the reducing iron and oxidation promoter according to need.

As a resin which is especially useful there can be mentioned modified polyethylene oxide. modified polyethylene oxide is a product obtained by graft-modifying polyethylene oxide with an ethylenically unsaturated carboxylic acid or an anhydride thereof, such as maleic anhydride, acrylic acid, methacrylic acid, crotonic acid or itaconic anhydride. By dint of the presence of many ether recurring units and grafted carboxyl groups, this resin has a high water-absorbing property, and furthermore, since the water-absorbing property is mainly given by the ether groups, the heat resistance is high and the resin is advantageous in that heat forming is possible. Furthermore, an acrylic acid/vinyl alcohol copolymer such as Sumika Gel® SP-510 or SP-520 and a sodium acrylate polymer such as Sumika Gel® N-100 or NP-1010 can also be used, though these resins are slightly inferior to modified polyethylene oxide in heat resistance.

The above-mentioned highly water-absorbing resin is used in the form of a blend with an olefin resin such as low-, medium- or high-density polyethylene, isotactic polypropylene, a propylene/ethylene copolymer, polybutene-1, an ethylene/butene-1 copolymer, a propylene/butene-1 copolymer, an ethylene/propylene/butene-1 copolymer, an ethylene/vinyl acetate copolymer, an ion-crosslinked olefin copolymer (ionomer) or a blend thereof. The highly water-absorbing resin and olefin resin are to be used at a weight ratio of from 1/99 to 90/10, especially from 10/90 to 90/10.

The oxygen scavenger is incorporated in an amount of 1 to 200 parts by weight, especially 5 to 200 parts by weight, per 100 parts by weight of the composition. If the amount of the oxygen scavenger is below the above-mentioned range, the oxygen-absorbing performance tends to decrease, and if the amount of the oxygen scavenger exceeds the above-mentioned range, the heat formability is often degraded.

The oxygen-absorbing resin composition of the present invention can be applied to the inner surface of a cap or a vessel so that the layer of the resin composition is exposed, or the oxygen-absorbing resin composition can be arranged on the inner surface side through a thin layer of a moisture-resistant resin such as an olefin resin. In the latter case, since the moisture-resistant resin layer prevent direct contact between the oxygen scavenger and the content, a high flavour-retaining effect is attained.

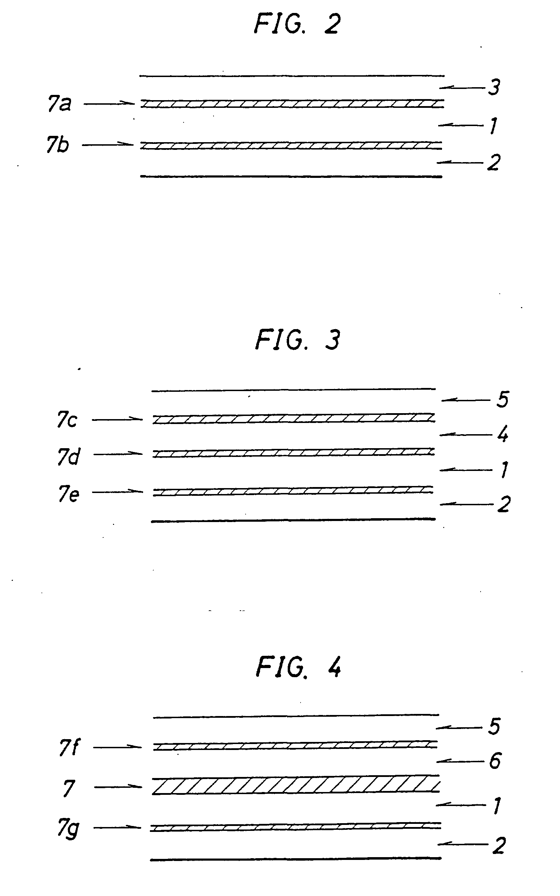

Figure 2 illustrates an example of the laminate suitable for a liner or packing of a cap. This laminate comprises an intermediate layer 1 composed of an oxygen scavenger-containing resin composition, an inner layer 2 which is a thin layer of a moisture-resistant resin, and an outer layer 3 formed according to need. The thickness of the inner layer is generally 1 to 20 µm.

The inner layer 2 allows permeation of oxygen and water vapor and exerts a function of preventing direct contact between water and the oxygen scavenger. If necessary, adhesive layers 7a and 7b can be formed between every two adjacent layers. The outer layer 3 exerts functions of making heat sealing of this liner or packing to a cap (not shown) easy and acting as a protecting layer when the liner and cap are prepared in advance. This laminate can be used, for example, for absorbing oxygen by laminating the laminate on the can end of a metal can.

Fig. 3 illustrates an example of the structure of the laminate suitable for a vessel, and this laminate comprises a layer 1 of an oxygen-absorbing resin composition and a layer 4 of a gas-barrier resin. An oxygen scavenger is incorporated in the oxygen-absorbing resin composition layer 1, and a moisture-absorbing resin layer 5 is formed on one surface of the gas-barrier resin layer 4 for preventing absorption of moisture from the outside. Furthermore, a layer 2 allowing permeation of oxygen and water vapor and preventing direct contact between the liquid water component and the first layer can be formed according to need.

Fig. 4 illustrates another example of the structure of the laminate suitable for a vessel. This laminate comprises a layer 1 of an oxygen scavenger-incorporated oxygen-absorbing resin composition and a metal foil 6. In this embodiment, an adhesive layer 7 formed for bonding the oxygen-absorbing resin composition to the metal foil. Furthermore, inner and outer layers 2 and 3 can be formed according to need. In the laminates shown in Figs. 3 and 4, adhesive layers 7c, 7d, 7e, 7f and 7g can be formed between every two adjacent layers according to need.

### Examples

The present invention will now be described with reference to the following examples.

### Example 1

A polyolefin composition pellet having an oxygen permeation coefficient of 4 x 10⁻¹⁰ cc·cm/cm²·sec·cmHg at a temperature of 20°C and a relative humidity of 0%, and a polypropylene master batch (Sumika Gel GRC PPM-3) of modified polyethylene oxide (Sumika Gel R-30) having a water absorption ratio of 30 were mixed at a weight ratio of 2/1, and an iron type oxygen scavenger having an average particle size of 40µm was further mixed in an amount of 25% by weight based on the resin by a batch type high-speed stirring vane type mixer (Henschel mixer). The mixture was pelletized by a pelletizer comprising an extruder having a 50-mm diameter screw built therein, a strand die, a blower cooling tank and a cutter. The pellet was formed into a liner having a diameter of 38 mm (liner A) by using an extruder having a 28-mm diameter screw built therein. For comparison, liners (liners B and C) were formed by using a pelletized product of a mixture of an olefin resin composition having an oxygen permeation coefficient of 3.9 x 10⁻¹⁰ cc·cm/cm²·sec·cmHg at a temperature of 20°C and a relative humidity of 0% with 25% by weight of an iron type oxygen scavenger and using a pelletized product of a mixture of an ethylene/vinyl alcohol copolymer (ethylene content of 32 mole% and saponification degree of 99.6 mole%) having an oxygen permeation coefficient of 4 x 10⁻¹⁴ cc·cm/cm²·sec·cmHg at a temperature of 20°C and a relative humidity of 0% and a water adsorption of 4.8% at a temperature of 20°C and a relative humidity of 100% with 25% by weight of an iron type oxygen scavenger, respectively. The water absorptions of the pellets before the formation of the liners after 24 hours' immersion in pure water at 20°C were 6.1% in case of the pellet for liner A, 0.22% in case of the pellet for liner B and 1.6% in case of the pellet for liner C.

A gas-insulating aluminum foil-laminated bag (having a lamination structure of PET/Al/PP) was filled with 200 ml of air, 1 ml of water and the liner prepared above and was then sealed and stored at 50°C. After the passage of a certain period, the oxygen concentration in air contained in the bag was determined by analysis using a gas chromatograph. It was found that liner A was apparently excellent in the oxygen-absorbing property. The obtained results are shown in Table 1.

### Example 2

A mixture of a polyolefin composition having an oxygen permeation coefficient of 4 x 10⁻¹⁰ cc·cm/cm²·sec·cmHg at a temperature of 20°C and a relative humidity of 0% with an acrylic acid/vinyl alcohol copolymer (Sumika Gel SP-510) having a water absorption ratio of 600 in pure water and an iron type oxygen scavenger was pelletized in the same manner as described in Example 1, and the pellet was formed into a liner (liner D). The oxygen-absorbing capacity was measured in the same manner as described in Example 1. The obtained results are shown in Table 1. It was found that liner D was apparently excellent over liners B and C.

### Example 3

A laminate liner (liner E) was formed by laminating a low-density polyethylene film having a thickness of 40 um on liner A of Example 1. The oxygen-absorbing test was carried out in the same manner as described in Example 1. The obtained results are shown in Table 1. It is seen that the oxygen-absorbing property was somewhat degraded by the lamination but liner E was still excellent over liners B and C.

### Example 4

A polyolefin composition having an oxygen permeation coefficient of 4 x 10⁻¹⁰ cc·cm/cm²·sec·cmHg at a temperature of 20°C and a relative humidity of 0% and a polypropylene master batch (Sumika Gel GRC PPM-3) of modified polyethylene oxide (Sumika Gel R-30) having a water absorption ratio of 30 in pure water mixed at a weight ratio of 2/1, and an iron type oxygen scavenger having an average particle size of 12 µm was further mixed in an amount of 25% by weight based on the resin and the mixture was pelletized in the same manner as described in Example 1. An oxygen scavenger-containing olefin resin film (OF) prepared from this pellet was extrusion coated on an aluminum foil by using an extruder having a screw having a diameter of 65 mm and a T-die. A titanate type anchoring agent was used as the anchoring agent. Finally, a laminate comprising 12 µm of PET, 9 µm of Aℓ, 50 µm of OF and 20 µm of PP arranged from the outer side was prepared. A cup-shaped vessel having an inner volume of 85 cm³, which was prepared from a laminate of an aluminum foil and a polypropylene film was charged with 65 ml of water, and the vessel was sealed with the above-mentioned laminate as the heat-sealing lid. Heat sterilization was carried out at 120°C for 30 minutes, and immediately, the oxygen concentration in the vessel was measured. The oxygen concentration in the head space was 5%, and an apparent effect of absorbing oxygen was attained. For comparison, an ordinary aluminum/PP sealing material was used. In this case, the oxygen concentration was not changed at all.

**Table 1**

| Liner | Absorbed Amount of O₂ (ml/liner) | | |
|---|---|---|---|
| | 1 day | 2 days | 3 days |
| A | 2.0 | 3.1 | 5.2 |
| B (Comparative) | 0.3 | 0.6 | 1.9 |
| C (Comparative) | 0.1 | 0.2 | 1.0 |
| D | 2.4 | 3.6 | 5.8 |
| E | 1.4 | 2.1 | 3.7 |

## Claims

1. An oxygen-absorbing resin composition comprising:
1) a heat formable resin composition which is a blend of
a) a water absorbing modified polyethylene oxide obtainable by graft modifying polyethylene oxide with an ethylenically unsaturated carboxylic acid or an anhydride thereof or an acrylic acid/vinyl alcohol copolymer; and
b) an olefin resin in a weight ratio of 1:99 to 90:10; and
2) an oxygen scavenger incorporated into the heat-formable resin composition 1) in an amount of 1 to 200 parts by weight per 100 parts by weight of the resin composition 1).

2. A resin composition as set forth in claim 1 wherein the oxygen scavenger comprises reducing iron and an oxidation promoter, in which the content of copper is lower than 150 ppm based on iron and the content of sulfur is lower than 500 ppm based on iron.

3. A cap provided with a liner or packing composed of a resin composition as set forth in claim 1 or claim 2.

4. A packaging vessel comprising a layer composed of a resin composition as set forth in claim 1 or claim 2.

## Patentansprüche

1. Sauerstoffabsorbierende Harzzusammensetzung, enthaltend
1) eine warmformbare Harzzusammensetzung, die ein Gemisch aus
a) einem wasserabsorbierenden modifizierten Polyethylenoxid, das durch Pfropfmodifizieren von Polyethylenoxid mit einer ethylenisch ungesätigten Carbonsäure oder einem Anhydrid hiervon oder einem Acrylsäure-Vinylalkohol-Copolymer erhältlich ist, und
b) einem Olefinharz
in einem Gewichtsverhältnis von 1:99 bis 90:10 ist, sowie
2) einen Sauerstofffänger, der in die warmformbare Harzzusammensetzung 1) in einer Menge von 1 bis 200 Gewichtsteile pro 100 Gewichtsteile der Harzzusammensetzung 1) eingearbeitet ist.

2. Harzzusammensetzung nach Anspruch 1, worin der Sauerstofffänger reduzierendes Eisen und einen Oxidationspromotor enthält, in dem der Kupfergehalt unter 150 ppm, bezogen auf Eisen, und der Schwefelgehalt unter 500 ppm, bezogen auf Eisen, liegt.

3. Kappe mit einer Auskleidung oder Packung, bestehend aus einer Harzzusammensetzung nach Anspruch 1 oder 2.

4. Verpackungsbehälter mit einer Schicht, die aus einer Harzzusammensetzung nach Anspruch 1 oder 2 besteht.

## Revendications

1. Composition de résine absorbant l'oxygène, comprenant :
1) une composition de résine thermoformable qui est un mélange de
a) un poly(oxyde d'éthylène) modifié absorbant l'eau, pouvant être obtenu en modifiant du poly(oxyde d'éthylène) par greffage avec un acide carboxylique éthyléniquement insaturé ou un anhydride de celui-ci, ou un copolymère acide acrylique/alcool vinylique, et
b) une résine oléfinique en un rapport en poids de 1:99 à 90:10 ; et
2) un fixateur d'oxygène incorporé dans la composition de résine thermoformable 1) en une quantité de 1 à 200 parties en poids pour 100 parties en poids de la composition de résine 1).

2. Composition de résine selon la revendication 1, dans laquelle le fixateur d'oxygène comprend du fer réducteur et un activateur d'oxydation, la teneur en cuivre étant inférieure à 150 ppm par rapport au fer et la teneur en soufre étant inférieure à 500 ppm par rapport au fer.

3. Un capuchon muni d'une revêtement intérieur ou d'une garniture constitué d'une composition de résine selon la revendication 1 ou la revendication 2.

4. Récipient d'emballage comprenant une couche constituée d'une composition de résine selon la revendication 1 ou la revendication 2.
